# EUROPÄISCHE PATENTANMELDUNG

(11) **EP 2 653 989 A2**
(43) Veröffentlichungstag der Anmeldung: **23.10.2013**
(21) Anmeldenummer: 13163498.2
(22) Anmeldetag: 12.04.2013
(51) Int. Cl.: G06F 17/30

(54) **Computerimplementiertes Verfahren zur Generierung eines Prozesses zum Transfer von Daten**

(30) Priorität: 19.04.2012 AT 4682012
(71) Anmelder: Krenn, Markus, 4040 Linz (AT)
(72) Erfinder: Krenn, Markus, 4040 Linz (AT)
(74) Vertreter: Ellmeyer, Wolfgang

(57) **Zusammenfassung**

Computerimplementiertes Verfahren zur Generierung eines Prozesses zum Transfer von Daten von einer Datenquelle 1 zu einem Datenziel 2, umfassend die folgenden Verfahrensschritte:
- Definition eines eine Datenbank umfassenden Datenziels,
- Suchen von Teilbereiche von zweiten Daten umfassend zweite Dateninhalte, ein zweites Muster und zweite Dateneigenschaften in der Datenquelle 1 mittels einer Suchfunktion,
- Vergleichen der Teilbereiche der zweiten Daten mit den ersten Daten
- Zuordnen der ersten Daten und der relevanten Teilbereiche von zweiten Daten,
- Generierung eines Datentransferprozesses für den Transfer von relevanten Teilbereichen der zweiten Daten von der Datenquelle 1 in das Datenziel 2 unter Berücksichtigung einer definierten Vorlage für den Datentransferprozess, wobei ein Datentransferprozess für zumindest eine benutzerdefinierte Tabelle der Datenbank 3 erstellt wird.

## Beschreibung

Die Erfindung betrifft ein computerimplementiertes Verfahren zur Generierung eines Prozesses zum Transfer von Daten von einer Datenquelle zu einem Datenziel, umfassend den Verfahrensschritt der Definition einer Datenbank umfassend ein Ordnungssystem für erste Daten aufweisend erste Dateninhalte, ein erstes Muster und erste Dateneigenschaften in einer Eingabeeinheit auf Basis der ersten Muster und/oder auf Basis der ersten Dateneigenschaften.

SQL Server Integration Services (SSIS) stellt einerseits eine umfangreiche, sichere und zuverlässige Plattform für einen Transfer von Daten dar. SISS zeichnet sich durch eine hohe Skalierbarkeit und durch eine hohe Leistungsfähigkeit aus. Eine sehr gute Nutzbarkeit ergibt sich aus einer umfangreichen Entwicklungsumgebung, Quellkontrolle, visuellen Fehlerkontrolle und einer umfangreichen Sammlung von möglichen Umwandlungen der Daten. SISS ist weiters erweiterbar um beispielsweise benutzerdefinierte Aufgaben.

Andererseits ist der Einsatz von SISS nach dem Stand der Technik begrenzt, weil SISS keinen ausreichenden Speicherplatz zum Anspeichern von den Transfer der Daten betreffenden Informationen wie beispielsweise die Zusammenhänge zwischen den Daten der Datenquelle und den Daten des Datenziels bietet. Im Allgemeinen wird das Verknüpfen von Daten einer Datenquelle und Daten eines Datenziels oder Eigenschaften dieser Daten als Mapping bezeichnet. SISS umfasst keine integrierte Änderungsverwaltung und keinen zentralen Speicherort für Metadaten.

Die Entwicklung von SISS-Paketen für beispielsweise einen Abgleich von unterschiedlichen Datentypen stellt ein arbeitsintensives Unterfangen dar. Die Möglichkeit der Dynamisierung ist nach dem Stand der Technik nicht ausreichend.

Die Individualisierung und/oder die Dynamisierbarkeit von auf SISS verwalteten Projekten ist sehr gering. Vorlagen für einen standardisierten Transfer von Daten sind kaum vorhanden. Es können darüber hinaus in den meisten Fällen keine Standardprozesse verwendet werden.

Benutzer von Extract-Transform-Load Verfahren (auch kurz als "ETL-Verfahren" bezeichnet"), im besonderen Business Intelligence Consultants sind in ihrer Tätigkeit mit einer Reihe von Herausforderungen konfrontiert wie beispielsweise ein hohes Maß an Individualität der Kundenanforderungen. Aus diesem Grund können bestehende standardisierte Vorlagen oder standardisierte Prozesse beim Transfer von Daten nur in einer unbefriedigenden Weise eingesetzt werden.

Weiters besteht eine Herausforderung in der aktuellen Entwicklung von ETL in Bezug auf eine Dokumentation des Transfers der Daten, ein Aussortieren von Daten mit schlechter Qualität, der Bewältigung von Daten von hoher Komplexität. Der Transfer der Daten soll darüber hinaus hinreichend transparent, gestaltbar, dokumentierbar und wartbar sein.

Das im Folgenden diskutierte erfindungsgemäße Verfahren kann auf der Basis von Verfahren zum Transfer von Daten nach dem Stand der Technik wie beispielsweise SSIS basieren. Die Aufgaben und die Datenflüsse eines Datentransferprozesses laufen in einer Datenquelle-Datenziel-Beziehung ab. Der auf Metadaten basierende Datentransferprozess basiert auf der Definition einer Datenquelle und eines Datenziels und der Verknüpfung von Datenquelle und Datenziel zum Abgleich von Datenquelle und Datenziel.

Das erfindungsgemäße Verfahren zum Transfer stellt sich der Aufgabe der Generierung zumindest eines Datentransferprozesses. Die Generierung eines Datentransferprozesses soll gleich wie die Generierung einer Vielzahl von Datentransferprozessen nach dem im folgenden Schema ablaufen, um so die Nachteile der Verfahren nach dem Stand der Technik zu überwinden.

Unter einer Generierung eines Datentransferprozesses wird die Vorbereitung einer Befehlsstruktur umfassend zumindest die zur Durchführung des Datentransferprozesses notwendigen Befehle verstanden. Die Generierung eines Datentransferprozesses schließt nicht unbedingt die Durchführung des Datentransferprozesses von der Datenquelle zum Datenziel aus.

Erfindungsgemäß wird dies durch die Bereitstellung eines computerimplementierten Verfahrens zum Transfer von Daten gelöst, welches Verfahren die folgenden Verfahrensschritte umfasst:
- Suchen von Teilbereichen von zweiten Daten umfassend zweite Dateninhalte, ein zweites Muster und zweite Dateneigenschaften in der Datenquelle mittels einer Suchfunktion, welche Teilbereiche der zweite Daten den ersten Daten in Bezugnahme auf die Dateninhalte, die jeweiligen Muster und/oder die jeweiligen Dateneigenschaften gemäß einer vordefinierten Ähnlichkeitsrelation entsprechen,
- Vergleichen der Teilbereiche der zweiten Daten mit den ersten Daten anhand eines Vergleiches der Dateninhalte und/oder der Muster und/oder der Dateneigenschaften zum Auffinden von relevanten Teilbereichen der zweiten Daten, wobei der Verfahrensschritt des Vergleichens das Eintragen eines Vergleichsstatements betreffend der zweiten Dateninhalten und/oder zweiten Dateimustern und/oder zweiten Dateieigenschaften im Vergleich jeweils zu ersten Dateninhalten und/oder ersten Dateimustern und/oder ersten Dateieigenschaften in ein Protokoll umfasst,
- Zuordnen der ersten Daten und der relevanten Teilbereiche von zweiten Daten,
- Generierung eines Datentransferprozesses für den Transfer von relevanten Teilbereichen der zweiten Daten von der Datenquelle in das Datenziel unter Berücksichtigung einer definierten Vorlage für den Datentransferprozess, wobei ein Datentransferprozess für zumindest eine benutzerdefinierte Tabelle der Datenbank erstellt wird.

Die ersten Daten umfassen erste Dateninhalte, ein erstes Muster und erste Dateneigenschaften. Die ersten Daten werden im Wesentlichen in Bezugnahme auf die Anforderungen des Benutzers an das computerimplementierte Verfahren generiert.

Die Dateninhalte umfassen jene Informationen, welche dem Benutzer im Rahmen des erfindungsgemäßen Verfahrens in einer Ausgabeeinheit angezeigt werden. Durch die Angabe der ersten Dateninhalte definiert der Benutzer, welche spezifischen Informationen der Benutzer erhalten möchte.

Das erste Muster umfasst Angaben, in welcher Ordnung und in Verknüpfung mit welchen weiteren ersten Dateninhalten die ersten Dateninhalte in den ersten Daten abgespeichert werden sollen. Die ersten Dateieigenschaften betreffen die Eigenschaften der ersten Datei wie beispielsweise die Form und Art der Speicherung der ersten Daten. Durch das erste Muster erhält der Benutzer die Möglichkeit, die Anordnung der ersten Daten in der Vorlage zu definieren. Eine benutzerdefinierte Anordnung der ersten Daten schließt auch eine vom Benutzer definierte automatische Ordnung zumindest Teile der ersten Daten ein.

Nach dem Stand der Technik sind unter anderem verschiedene Datenbanksysteme zum Abspeichern von Daten bekannt, durch welche Datenbanksysteme die Dateieigenschaften bestimmt werden.

Weiters umfasst die Dateneigenschaft Informationen über die Datenquelle.

Durch Festlegen der Dateneigenschaft bestimmt der Benutzer beispielsweise die Datenquelle und die Speicherart.

Das erfindungsgemäße Verfahren löst die Aufgabe des Suchens von zweiten Dateninhalten entsprechend den ersten Dateninhalten. Das zweite Muster der zweiten Daten muss hierbei keinesfalls dem ersten Muster der ersten Daten entsprechen. Die zweiten Daten können durch das zweite Muster dadurch charakterisiert sein, dass die zweiten Daten zweite Dateninhalte entsprechend den ersten Dateninhalten und weitere zweite Dateninhalte nicht entsprechend den ersten Dateninhalten umfassen kann. Es kann Teil der hier aufgezeigten Lösung sein, dass das erfindungsgemäße Verfahren Suchroutinen umfasst, mittels welcher Suchroutinen zweite Dateninhalte unabhängig von zweiten Mustern und zweiten Dateneigenschaften umfassen kann. Es wird hierbei auf Suchroutinen nach dem Stand der Technik verwiesen.

Es werden Metadaten der zweiten Daten und der ersten Daten in einem Metadatenspeicher abgelegt. Gegebenenfalls bedient sich das erfindungsgemäße Verfahren und Vorrichtungen nach dem Stand der Technik, um die Erstellung und darauffolgende Abspeicherung der Metadaten effektiv zu gestalten. Beispielsweise können Metadaten-Provider und dazugehörige Verfahren zum Einsatz kommen.

Das erfindungsgemäße Verfahren kann einen so genannten Dynamic Statement Builder umfassen, mittels welchen während des Verfahrensschrittes der Generierung des Datentransferprozesses für jeden dynamischen Teil eines Datentransferprozess ein oder mehrere dynamisch erzeugte Statements in den zu generierenden Datentransferprozess abgelegt wird.

Eine Vorlage eines dynamischen Datentransferprozesses benötigt für jeden dynamischen Teil des Datentransferprozesses ein oder mehrere Statements, die vom Dynamic Statement Builder geliefert werden. Der Generator legt während der Generierung des Datentransferprozesses an den definierten Stellen im zu generierenden Datentransferprozess das oder die relevanten Statements ab.

Beispiel: im Dynamic Statement Builder wird definiert, einen Bereich in der Zieltabelle zu löschen. Wenn der Generator einen Datentransferprozess generiert, liefert der Dynamic Statement Builder den dazugehörigen Befehl "Delete Tabellenbereich", wobei dieses Statement direkt im generierten Datentransferprozess abgelegt wird.

Durch die vordefinierte Ähnlichkeitsrelation wird das erforderliche Maß der Übereinstimmung der ersten Daten mit den zweiten Daten in Bezugnahme auf Dateninhalte, Muster und Dateneigenschaften definiert. Die ersten Daten sind im Wesentlichen benutzerdefinierte Daten, welche unter anderen durch die Anforderungen des Benutzers generiert werden. Durch die Ähnlichkeitsrelation wird angegeben, welche zweiten Daten den ersten Daten entsprechen.

Das Suchen von zweiten Daten kann in Verbindung mit einem definierten Grenzwert einer Ähnlichkeitsrelation das Suchen von zweiten Daten mit einer möglichst hohen Ähnlichkeit implizieren.

Die Generierung des Datentransferprozesses kann automatisch durchgeführt werden, wobei die Generierung des Datentransferprozesses beispielsweise durch eine Zeitvorgabe und/oder durch ein Ereignis ausgelöst werden kann. Die Auswahl der Vorlage für die Generierung des Datentransferprozesses kann in Abhängigkeit des Vergleichsstatements erfolgen, um so den Datentransferprozess in Hinblick auf eine Datentransferrate, eine Dynamisierung und/oder Individualisierung des Datentransferprozesses möglichst optimal gestalten zu können. Ebenso soll der Datentransferprozess wegen der Verwendung von Vorlagen zur Generierung des Datentransferprozesses leichter wartbar und überwachbar sein.

Bei einem Extraxt-Transform-Load Projekt in einem üblichen Umfang umfasst dieses eine Anzahl von mehreren hundert bis tausend zu erstellenden Datentransferprozesse, welche nach dem Stand der Technik manuell zu erstellen sind. Durch den Einsatz eines Generators beziehungsweise der Durchführung des Verfahrensschrittes der Generierung des Datentransferprozesses, welcher im Wesentlichen automatisch abläuft, kann die Entwicklungszeit beziehungsweise der Entwicklungsaufwand für die Erstellung der Datentransferprozesse erheblich, schätzungsweise um die Hälfte reduziert werden.

Eine Vorlage für den Datentransferprozess kann Information über die Durchführung dieses beispielsweise in Abhängigkeit vom Auftreten eines zeitlichen Ereignisses, vom Auftreten eines allgemeinen Ereignisses, der Lokalität des die Datenbank des Datenziels beherbergenden Computers et cetera sein. Ein allgemeines Ereignis kann beispielsweise durch die Veränderung von ersten Daten und/oder zweiten Daten begründet sein. Im Falle einer Änderung der Datenbank der Datenquelle, der Datenbank des Datenziels oder einer im folgenden beschriebenen Änderung der Vorlage kann wegen der Verwendung der Vorlage zur Generierung des Datentransferprozesses einfach und rasch ein Datentransferprozess generiert werden. Die erwähnte Einfachheit der Generierung des Datentransferprozesses ist im Wesentlichen durch den automatischen Generierungsprozess begründet.

Das erfindungsgemäße Verfahren, insbesondere die Verwendung von Vorlagen für den Datentransferprozess zeichnet sich im Vergleich zu Verfahren nach dem Stand der Technik durch eine hohe Verlässlichkeit aus. Bei Verfahren nach dem Stand der Technik erfolgt - wie oben angeführt - die Erstellung des Datentransferprozesses in einem manuell durchzuführenden Arbeitsschritt, welcher in Anbetracht seiner manuellen Durchführung Fehler aufweisen kann. Letzteres bedingt ein umfangreiches Testen der manuell erstellten Datentransferprozess vor Verwendung dieser.

Weiters ist das System zur Durchführung des erfindungsgemäßen Verfahrens wegen der Implizierung von Vorlagen zur Generierung des Datentransferprozesses leicht wartbar, da im Wesentlichen einem definierten Schema entsprechende Vorlagen und die auf Basis dieser generierten Datentransferprozesse gewartet werden. Bei manuell erstellten Datentransferprozessen nach dem Stand der Technik sind diese erfahrungsgemäß dem subjektivem Verhalten des Benutzers und des Administrators unterworfen.

Das erfindungsgemäße Verfahren ist keinesfalls auf die Durchführung der Verfahrensschritte in der obigen Reihenfolge beschränkt. Es ist im Rahmen der Offenbarung nicht ausgeschlossen, dass die oben angeführten Verfahrensschritte in einer anderen als der oben angeführten Reihenfolge, teilweise auch zeitlich parallel zueinander durchgeführt werden.

Der im folgenden verwendete Begriff "dynamisch" ist so zu verstehen, dass in Abhängigkeit eines Zeitpunktes, einer Zeitspanne oder des Eintreten eines Ereignisses Verfahrensschritte oder weitere Verfahrensschritte des erfindungsgemäßen Verfahrens gesetzt werden. In der Regel laufen die Verfahrensschritte oder weitere Verfahrensschritte automatisch ab.

Das erfindungsgemäße Verfahren kann weiters die Verfahrensschritte der Durchführung des Datentransferprozesses und des Anzeigens der zweiten Daten in der Eingabeeinheit oder einer sonstigen Ausgabeeinheit umfassen.

Die Daten können während des erfindungsgemäßen Verfahrens verändert werden. Beispielsweise können Rechenoperation unter Einbeziehung der ersten Daten und/oder der zweiten Daten durchgeführt werden, wobei das Ergebnis an das Datenziel und/oder an die Datenquelle übermittelt wird.

Teile einer die Datenquelle beschreibenden Datenbank und/oder Teile einer das Datenziel beschreibenden Datenbank können durch den Benutzer als eine dynamische Datenbank definiert werden.

Dynamische Datenbanken zeichnen sich dadurch aus, dass Daten der Datenbank, insbesondere Dateninhalte in Abhängigkeit einer Zeitspanne und/oder eines Ereignisses abgeändert werden. Beispielsweise können die Daten, welche in Teilen einer dynamischen Datenbank abgespeichert sind, nach einer definierten Zeitspanne erneuert werden.

Das erfindungsgemäße Verfahren kann sich dadurch auszeichnen, dass die Generierung des Datentransferprozesses in Abhängigkeit einer Änderung eines Teils einer dynamischen Datenbank erfolgt.

Durch das während des Verfahrensschrittes des Vergleiches von ersten Daten und zweiten Daten gebildete Vergleichsstatement sind Veränderungen der zweiten Daten im Vergleich zu den ersten Daten und/oder Veränderungen der zweiten Daten zu einem Zeitpunkt t im Vergleich zu einem vorhergegangenen Zeitpunkt t-1 leicht erkennbar. Im Vergleich zu Verfahren nach dem Stand der Technik ist kein Vergleich der gesamten Daten notwendig. Das Vergleichsstatement ist insofern von Vorteil, als dass nicht die kompletten zweiten Daten, sondern nur die in Bezug auf das Vergleichsstatement relevanten Teile der zweiten Daten auf Neuheit und/oder Veränderung überprüft werden.

Das erfindungsgemäße Verfahren kann Routinen umfassen, durch welche eine automatische Generierung eines Datentransferprozesses bei Neuheit der zweiten Daten beziehungsweise der relevanten Teilbereich der zweiten Daten gestartet wird.

Weitere Teile einer die Datenquelle beschreibenden Datenbank und/oder einer das Datenziel beschreibenden Datenquelle können durch einen Benutzer als eine statische Datenbank definiert werden.

Das erfindungsgemäße Verfahren kann sich dadurch auszeichnen, dass die Generierung eines Datentransferprozesses betreffend eines statischen Teils einer Datenbank durch den Benutzer gesteuert ist.

Die Vorlage für den Datentransferprozess kann abänderbar definiert sein, sodass durch die Abänderung der Vorlage eine neue Vorlage geschaffen wird. Die Generierung des Datentransferprozesses kann in Abhängigkeit des Vorhandenseins einer abgeänderten, neuen Vorlage durchgeführt werden. In Bezugnahme auf die obige Offenbarung stellt das Vorhandensein der neuen Vorlage ein Ereignis dar, welches die Generierung eines Datentransferprozesses auslöst. Die Möglichkeit der Abänderung der Vorlage ist im Sinne der Offenbarung des erfindungsgemäßen Verfahrens ein möglicher Lösungsansatz zur Individualisierung und/oder Dynamisierung eines Datentransferprozesses und/oder der Generierung dieses.

Die Vorlage des Datentransferprozesses kann eine benutzerdefinierte Vorlage und/oder eine dynamische Vorlage sein.

Eine dynamische Vorlage kann sich dadurch auszeichnen, dass Teile der Vorlage in Abhängigkeit von zeitlichen Ereignissen vorgegeben sein können. Es ist die beliebige Kombination der Vorlagen möglich.

Die hier offenbarte Erfindung kann auch beinhalten, dass der Benutzer die Vorlage selbst definiert, beispielsweise die Generierung des Datentransferprozesses nach seinen Bedürfnissen gesteuert wird. Das erfindungsgemäße Verfahren kann Routinen umfassen, welche die Generierung eines Datentransferprozesses nach erfolgtem Eingriff durch den Benutzer bewirken.

Das erfindungsgemäße Verfahren kann sich in Hinblick auf einer Abänderung der Vorlage, insbesondere der dynamischen und/oder benutzerdefinierten Abänderung von Teilen der Vorlagen dadurch auszeichnen, dass nur für die abgeänderten Teile der Vorlage neue Datentransferprozesse generiert werden, welche mit zeitlich zuvor generierten Datentransferprozessen gemeinsam, in Teilen anstelle dieser ablaufen.

Im Vergleich zu Verfahren nach dem Stand der Technik kann sich das erfindungsgemäße Verfahren dadurch auszeichnen, dass die Generierung der Datentransferprozesse im Wesentlichen nicht manuell, sondern automatisch erfolgt. Aus diesem Grund sind kostenintensive Entwicklungsarbeiten weitestgehend bei Verwendung des hier offenbarten Verfahrens nicht notwendig.

Das erfindungsgemäße Verfahren kann sich dadurch auszeichnen, dass die zweiten Daten zweite Datenteile umfassen, welche Datenteile in unterschiedlichen Datenquelleinheiten gespeichert sind, sodass die Suche von zweiten Daten eine Suche von zweiten Datenteilen umfasst.

Der Vergleich der zweiten Daten mit den ersten Daten auf den Vergleich von ausgewählten zweiten Datenteilen mit ausgewählten ersten Datenteilen beschränkt ist.

Vorzugsweise werden zumindest jene zweiten Datenteile mit den ersten Datenteilen verglichen, welche Datenteile in Bezug auf das Vergleichsstatement relevant sind. Das erfindungsgemäße Verfahren kann Routinen umfassen, welche eine Bewertung der Datenteile in Hinblick auf eine Relevanz dieser auf einen Vergleich der Daten umfasst.

Es kann der Verfahrensschritt der Generierung des Datentransferprozesses einen Verfahrensschritt der Dokumentation umfassen. In hierzu gleicher Weise kann der Verfahrensschritt des Datentransfers dokumentiert werden.

Die Dokumentation der Generierung des Datentransferprozesses kann insbesondere im Falle von dynamischen Datenbanken oder dynamischen Datenbankenteilen eine Dokumentation des Auslösegrundes der Generierung des Datentransferprozesses umfassen. Ein möglicher Auslösegrund kann das Eintreffen eines Ereignisses oder der Ablauf einer Zeitspanne sein.

Im Falle von statischen Datenbanken kann die erfolgte Steuerung durch den Benutzer Teil der Dokumentation sein.

Die folgende Figur zeigt ein Diagramm, welches den Datenfluss bei Anwendung des erfindungsgemäßen Verfahrens veranschaulicht. Der Datentransferprozess von der Datenquelle zum Datenziel wird durch das erfindungsgemäße Verfahren basierend auf der Verfahrensschritte ablaufend in einem Metadatenspeicher, in einer Paketgenerierungseinheit unter Verwendung der in der Vorlage abgespeicherten Information generiert und anschließend durchgeführt. Das erfindungsgemäße computerimplementierte Verfahren basiert auf den folgenden Verfahrensschritten.

In einem ersten Verfahrensschritt erfolgt eine Definition eines eine Datenbank umfassenden Datenziels umfassend ein Ordnungssystem für erste Daten aufweisend erste Dateninhalte, ein erstes Muster und erste Dateneigenschaften in einer Eingabeeinheit auf Basis der ersten Muster und/oder auf Basis der ersten Dateneigenschaften.

In einem nachfolgenden Verfahrensschritt wird das Suchen von zweiten Daten umfassend zweite Dateninhalte, ein zweites Muster und zweite Dateneigenschaften in der Datenquelle mittels einer Suchfunktion, welche zweite Daten den ersten Daten in Bezugnahme auf die Dateninhalte, die jeweiligen Muster und/oder die jeweiligen Dateneigenschaften gemäß einer vordefinierten Ähnlichkeitsrelation entsprechen, bewerkstelligt.

Anschließend erfolgt das Vergleichen der zweiten Daten mit den ersten Daten anhand eines Vergleiches von Dateninhalten und/oder der Muster und/oder der Dateneigenschaften, wobei der Verfahrensschritt des Vergleichens das Eintragen eines Vergleichsstatements betreffend der zweiten Dateninhalten und/oder zweiten Dateimustern und/oder zweiten Dateieigenschaften im Vergleich jeweils zu ersten Dateninhalten und/oder ersten Dateimustern und/oder ersten Dateieigenschaften in ein Protokoll umfasst.

Weiters erfolgt der Verfahrensschritt des Zuordnens von ersten Daten und zweiten Daten, in welchem die ersten Daten und die zweiten Daten in unter Beachtung des Vergleichsstatements miteinander verknüpft.

Anschließend erfolgt die Generierung eines Datentransferprozesses im Datentransfergenerator für den Transfer von zweiten Daten in das Datenziel unter Berücksichtigung von definierten Vorlagen für den Datentransferprozess. In den Vorlagen für den Datentransferprozess ist beispielhaft der Verlauf und die Struktur des Datentransferprozesses geregelt, so dass dieser in Abhängigkeit der Vorlagen generiert werden kann. Es wird zumindest ein Datentransferprozess für einen Transfer eines Satzes von zweiten Daten in einen Satz von ersten Daten im Datenziel erzeugt. Ein Satz von Daten ist durch eine Tabelle gebildet.

Abschließend kann die Durchführung des Datentransferprozesses und die Anzeige der zweiten Daten erfolgen.

Im Metadatenspeicher werden Metadaten betreffend der ersten Daten und der zweiten Daten abgespeichert. Die Metadaten sind mit der dynamischen und/oder benutzerdefinierten Vorlage verknüpft. Wegen der Verknüpfung der dynamische und/oder benutzerdefinierten Vorlage mit der Vorlage sind die Metadaten mit der Verlage verknüpft. Der Datentransfergenerator erhält aus dem Metdatenspeicher die für die Generierung des Datentransferprozesses notwendigen aus den Metadaten ableitbaren Informationen über den Datentransferprozess. Bei dynamischen Vorlagen liefert der Dynamic Statement Builder ein oder mehrere Statements, die vom Datentransfergenerator in die definierten Stellen im zu generierenden Datentransferprozess abgelegt werden.

Die dynamische Vorlage kann als ein Teil der Vorlagen angesehen werden. Die dynamische Vorlage und die Vorlage stehen in einer engen Verknüpfung zueinander. Die Veränderung der Metadaten und/oder die Metadaten selbst fließen somit in die Generierung des Datentransferprozesses ein.

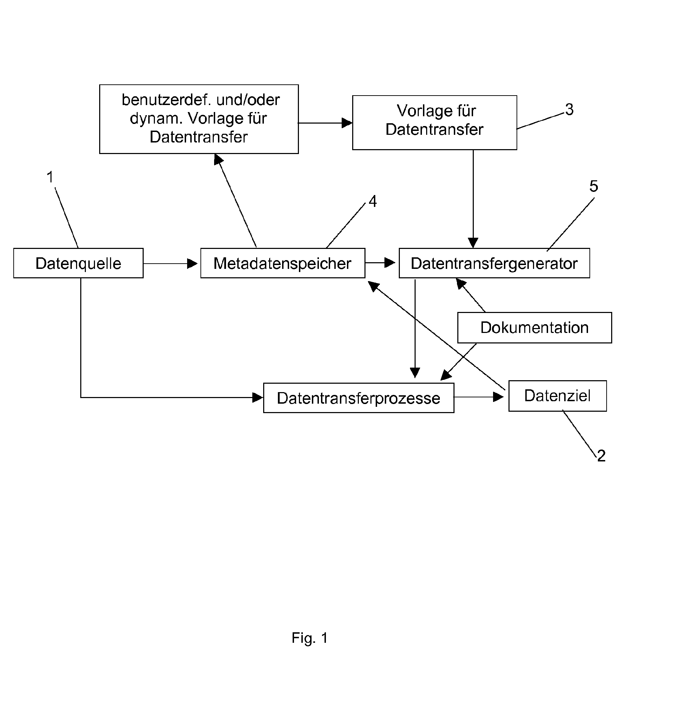

## Patentansprüche

1. Computerimplementiertes Verfahren zur Generierung eines Prozesses zum Transfer von Daten von einer Datenquelle zu einem Datenziel, umfassend den folgenden Verfahrensschritt der
- Definition eines eine Datenbank umfassenden Datenziels umfassend ein Ordnungssystem für erste Daten aufweisend erste Dateninhalte, ein erstes Muster und erste Dateneigenschaften in einer Eingabeeinheit auf Basis der ersten Muster und/oder auf Basis der ersten Dateneigenschaften,
**dadurch gekennzeichnet, dass** das erfindungsgemäße Verfahren weiters die folgenden Verfahrensschritte umfasst:
- Suchen von Teilbereiche von zweiten Daten umfassend zweite Dateninhalte, ein zweites Muster und zweite Dateneigenschaften in der Datenquelle 1 mittels einer Suchfunktion, welche Teilbereiche der zweite Daten den ersten Daten in Bezugnahme auf die Dateninhalte, die jeweiligen Muster und/oder die jeweiligen Dateneigenschaften gemäß einer vordefinierten Ähnlichkeitsrelation entsprechen,
- Vergleichen der Teilbereiche der zweiten Daten mit den ersten Daten anhand eines Vergleiches der Dateninhalten und/oder der Muster und/oder der Dateneigenschaften zum Auffinden von relevanten Teilbereichen der zweiten Daten, wobei der Verfahrensschritt des Vergleichens das Eintragen eines Vergleichsstatements betreffend der zweiten Dateninhalten und/oder zweiten Dateimustern und/oder zweiten Dateieigenschaften im Vergleich jeweils zu ersten Dateninhalten und/oder ersten Dateimustern und/oder ersten Dateieigenschaften in ein Protokoll umfasst,
- Zuordnen der ersten Daten und der relevanten Teilbereiche von zweiten Daten,
- Generierung eines Datentransferprozesses für den Transfer von relevanten Teilbereichen der zweiten Daten von der Datenquelle 1 in das Datenziel 2 unter Berücksichtigung einer definierten Vorlage für den Datentransferprozess, wobei ein Datentransferprozess für zumindest eine benutzerdefinierte Tabelle der Datenbank 3 erstellt wird.

2. Verfahren nach Anspruch 1, **dadurch gekennzeichnet, dass** das erfindungsgemäße Verfahren zumindest einen der folgenden Verfahrensschritte umfasst:
- Durchführung des Datentransferprozesses,
- Anzeigen der zweiten Daten in der Anzeigevorrichtung.

3. Verfahren nach einem der Ansprüche 1-2, **dadurch gekennzeichnet, dass** Teile einer die Datenquelle umfassenden Datenbank und/oder Teile einer das Datenziel umfassenden Datenbank durch einen Benutzer und/oder automatisch als eine dynamische Datenbank definierbar sind, wobei die Generierung des Datentransferprozesses in Abhängigkeit einer Änderung der dynamischen Datenbank erfolgt.

4. Verfahren nach einem der Ansprüche 1-3, **dadurch gekennzeichnet, dass** weitere Teile der Datenbank durch den Benutzer und/oder automatisch als eine statische Datenbank definierbar sind.

5. Verfahren nach einem der Ansprüche 1-4, **dadurch gekennzeichnet, dass** die Vorlage für den Datentransferprozess zu einer neuen Vorlage abänderbar ist, wobei die Generierung des Datentransferprozesses in Abhängigkeit des Vorhandenseins einer neuen Vorlage erfolgt.

6. Verfahren nach einem der Ansprüche 1-5, **dadurch gekennzeichnet, dass** die Vorlage des Datentransferprozesses eine benutzerdefinierte Vorlage und/oder eine dynamische Vorlage des Datentransferprozesses umfasst.

7. Verfahren nach einem der Ansprüche 1-6, **dadurch gekennzeichnet, dass** die relevanten Teilbereiche der zweiten Daten in unterschiedlichen Datenquelleinheiten gespeichert sind.

8. Verfahren nach einem der Ansprüche 1-7, **dadurch gekennzeichnet, dass** der Vergleich der zweiten Daten mit den ersten Daten auf den Vergleich von ausgewählten zweiten Datenteilen mit ausgewählten ersten Datenteilen beschränkt ist.

9. Verfahren nach einem der Ansprüche 1-8, **dadurch gekennzeichnet, dass** der Verfahrensschritt der Durchführung des Datentransferprozesses einen Verfahrensschritt der Dokumentation der Generierung des Datentransferprozesses und/oder der Durchführung des Datentransferprozesses umfasst.
